# EUROPÄISCHE PATENTSCHRIFT

(11) **EP 3 138 106 B1**
(45) Veröffentlichungstag und Bekanntmachung des Hinweises auf die Patenterteilung: **13.04.2022**
(21) Anmeldenummer: 15732627.3
(22) Anmeldetag: 25.06.2015
(51) Int. Cl.: H01B 3/56

(54) **VORRICHTUNG UND VERFAHREN ZUR VERWENDUNG VON 1,1,1,4,4,4-HEXAFLUOR-2-BUTEN ALS GASFÖRMIGES, ELEKTRISCH ISOLIERENDES UND/ODER LICHTBOGEN-LÖSCHENDES MEDIUM**
DEVICE AND METHOD FOR USING 1,1,1,4,4,4-HEXAFLUORO-2-BUTENE AS AN ELECTRICALLY INSULATING AND/OR ARC-EXTINGUISHING GASEOUS MEDIUM
DISPOSITIF ET PROCÉDÉ D'UTILISATION DU 1,1,1,4,4,4-HEXAFLUORO-2-BUTÈNE COMME FLUIDE GAZEUX ÉLECTRIQUEMENT ISOLANT ET/OU D'EXTINCTION D'ARC

(30) Priorität: 03.07.2014 DE 102014212884; 16.10.2014 DE 102014220985
(43) Veröffentlichungstag der Anmeldung: 08.03.2017
(73) Patentinhaber: Siemens Aktiengesellschaft, 80333 München (DE)
(72) Erfinder: ESSER-RANK, Karsten, 63628 Bad Soden-Salmünster-Ahl (DE); HAMMER, Thomas, 91334 Hemhofen (DE); ISE, Martin, 91058 Erlangen (DE); LINS, Günter, 91056 Erlangen (DE)
(86) Internationale Anmeldenummer: PCT/EP2015/064366
(87) Internationale Veröffentlichungsnummer: WO 2016/001054

(56) Entgegenhaltungen:
- WO-A2-2013/059550
- US-A1- 2010 163 776
- Eu Directive Rohs ET AL: "g GE Power & Water MATERIAL SPECIFICATION D50A159 Materials and Processes Engineering DESIGN REQUIREMENTS FOR REGULATED MATERIALS AND CHEMICALS B SPECIFICATION REVISED TO REFLECT ADDITION OF MATERIALS IDENTIFIED IN RESTRICTION ON USE OF CERTAIN HAZARDOUS SUBSTANCES", AMENDMENTS EU NO, 1. Januar 2011 (2011-01-01), XP055212241, Gefunden im Internet: URL:https://www.gepower.com/content/dam/ge power-pw/global/en_US/documents/supplier-d ocument-library/design-requirements-regula ted-materials-chemicals-rev-g-d50a159.pdf [gefunden am 2015-09-09]

## Beschreibung

Bei Vorrichtungen, die bspw. (einen/eine) Transformator(en), Stromleitung(en) (insb. Energieübertragungsleitung(en) für elektrische Energie mit Hilfe hoher Spannungen), Sammelschiene(n), Trennschalter, Leistungsschalter, Lasttrennschalter, Erdungsschalter, (Schalt)Schütz(e), Wellenleiter, etc. aufweisen, und bei denen große elektrische Spannungen (ab etwa 1 kV und größer) und/oder starke elektrische Felder auftreten können, wird typischerweise ein Gas oder Gasgemisch zur elektrischen Isolierung von deren elektrisch aktiven (d.h. unter elektrischer Spannung stehenden oder einem starken elektrischen Feld ausgesetzten) Teilen und gegebenenfalls zum Löschen von Schaltlichtbögen eingesetzt.

Hierzu sind die Vorrichtungen oder auch nur deren elektrisch aktive Teile in einem gasdichten Gehäuse angeordnet und befindet sich das Gas oder Gasgemisch im Zwischenraum zwischen der elektrischen Vorrichtung bzw. dem elektrisch aktiven Teil der Vorrichtung und der Wandung des Gehäuses.

Als isolierendes und/oder Lichtbogen-löschendes Gas bzw. Gasgemisch wird seit mehreren Jahrzehnten häufig SF₆ oder eine Mischung aus SF₆ und wenigstens einer weiteren gasförmigen Komponente verwendet.

SF₆ ist für die genannten Vorrichtungen und den genannten Anwendungszweck an sich sehr gut geeignet, da SF₆ sowohl sehr gute Isoliereigenschaften (es ist nur etwa 10 % des Raumbedarfs eines luftisolierten Systems erforderlich; Spannungsfestigkeit etwa 2,7-fach besser als Luft) als auch sehr gute Löscheigenschaften aufweist (beinahe vollständige Rekombination nach dem Auftreten eines Lichtbogens, keine leitfähigen Zersetzungsprodukte).

Darüber hinaus bieten SF₆-gekapselte Systeme ein sehr hohes Maß an Zuverlässigkeit, Personenschutz (SF₆ ist chemisch sehr stabil und nicht toxisch) und Lebensdauer (bis zu 30 Jahren) und erfordern nur einen sehr niedrigen Wartungsaufwand. Auch ist SF₆ nach dem derzeitigen Wissensstand unbedenklich für die Ozonschicht der Stratosphäre.

Diesen positiven Eigenschaften steht gegenüber, dass SF₆ ein vergleichsweise hohes Treibhauspotential ("Global Warming Potential", GWP) von 23900 (bezogen auf CO₂ betrachtet über einen Zeitraum von 100 Jahren) und eine geschätzte Lebensdauer von 3200 Jahren in der Atmosphäre aufweist. Aktuell beträgt die Konzentration von SF₆ in der Atmosphäre etwa 3 bis 4 ppt (1 ppt=1*10⁻¹² Volumen-Anteile) und hat SF₆ einen Anteil am gesamten Treibhauseffekt von < 1 Promille. Aufgrund seines hohen Treibhauspotentials ist SF₆ gemäß dem Kyöto-Protokoll von 1997 in die Liste der Gase aufgenommen worden, deren Eintritt in die Atmosphäre begrenzt werden soll.

Vor diesem Hintergrund wäre ein Ersatz für SF₆ wünschenswert, der mindestens ähnlich gute Eigenschaften in Bezug auf elektrische Isolierung und als Löschmittel, jedoch ein geringeres Treibhauspotential aufweist.

Bisher sind folgende Ansätze für elektrische Vorrichtungen ohne Verwendung von SF₆ in Erwägung gezogen worden:
- Luftisolierte Anlagen: Bei diesen ist jedoch ein größeres Bauvolumen erforderlich, weil die Spannungsfestigkeit von Luft - wie oben bereits erwähnt - im Vergleich zu SF₆ um den Faktor 2,7 geringer ist. Auch sind die Löscheigenschaften von Luft um einen Faktor von etwa 100 schlechter als von SF₆.
- Feststoffisolierte Anlagen: Feststoffisolierung kann bzgl. der Alterung kritisch sein, bspw. wenn durch Teilentladungseffekte die Isolierung beschädigt wird.

Aus der US 8,080,185 B2 ist ein Verfahren zum Verwenden einer gasförmigen dielektrischen Verbindung bekannt, wobei in eine elektrische Vorrichtung ein Gas, ausgewählt aus der Gruppe bestehend aus Stickstoff, CO₂ und N₂O, und einer gasförmigen Verbindung eingebracht werden, wobei die gasförmige Verbindung derart ausgewählt ist, dass sie die folgenden Eigenschaften aufweist:
einen Siedepunkt im Bereich zwischen etwa -20 °C bis etwa -273 °C; ein GWP von weniger als 22200; chemische Stabilität gemessen als negative Standardbildungsenthalphie (dHf<0); sofern das dielektrische Gas austritt eine Toxizität derart, dass die wirksame verdünnte Konzentration nicht die zulässige Arbeitsplatzkonzentration übersteigt; und eine Durchschlagsfestigkeit größer als Luft. In dem genannten Patent ist auch eine Reihe von Verbindungen aufgelistet, die die angegebenen Eigenschaften aufweisen.

Die WO 2013/004798 A1 beschreibt die Verwendung einer Mischung eines Hydrofluorolefins mit drei Kohlenstoffatomen, bevorzugt C₃H₂F₄, das optional mit einem Verdünnungsgas gemischt sein kann, als Lichtbogen-löschendes und/oder elektrisch isolierendes gasförmiges Medium in einer Hochspannungs-Vorrichtung.

Die US 2010/163776 A1 beschreibt azeotrope oder Azeotrop-ähnliche Mischungen von E-1,1,1,4,4,4-hexafluor-2-buten mit Methylformiat, n-Pentan, 2-Methylbutan, trans-1,2-Dichlorethylen, 1,1,1,3,3-Pentafluorpropan, n-Butan oder Isobutan. Und die WO 2013/059550 A2 hat Azeotrop-ähnliche Mischungen aus E-1-Chlor-2,3,3,3-tetrafluorpropen mit E-1,1,1,4,4,4-Hexafluor-2-buten oder E-1,1,1,4,4,5,5,5-Octafluor-2-penten zum Gegenstand. Beschrieben werden in diesen beiden Druckschriften jeweils auch Verfahren zum Löschen oder Unterdrücken eines Feuers unter Verwendung derartiger azeotroper oder Azeotrop-ähnlicher Mischungen sowie ein Verfahren zum Verwenden derartiger azeotroper oder Azeotrop-ähnlicher Mischungen als Dielektrika.

Es ist Aufgabe der vorliegenden Erfindung, einen Ersatz für SF₆ als Isolier- bzw. Schaltgas vorzuschlagen, der besser geeignet ist als die bisher hierfür vorgeschlagenen Verbindungen, Elemente bzw. Mischungen davon.

Diese Aufgabe wird gelöst durch die Vorrichtung gemäß Anspruch 1 sowie das Verfahren gemäß Anspruch 8. Vorteilhafte Weiterbildungen der Erfindung sind Gegenstand der Unteransprüche.

Erfindungsgemäß wird eine Vorrichtung mit wenigstens einer in einem Betriebszustand der Vorrichtung eine elektrische Spannung von 1 kV oder größer aufweisenden elektrischen Einrichtung, und/oder mit wenigstens einer Einrichtung zur Teilchenbeschleunigung vorgeschlagen, wobei die Einrichtung zumindest teilweise in einem Gehäuse angeordnet ist, das ein gasförmiges, elektrisch isolierendes und/oder Lichtbogen-löschendes Medium enthält.

Die erfindungsgemäße Vorrichtung ist dadurch gekennzeichnet, dass das Medium aus 1,1,1,4,4,4-Hexafluor-2-Buten besteht oder 1,1,1,4,4,4-Hexafluor-2-Buten enthält und dass in dem Medium 1,1,1,4,4,4-Hexafluor-2-Buten mit einem Partialdruck im Bereich von 30 mbar bis einschließlich 250 mbar enthalten ist.

Die vorliegende Erfindung beruht auf der Erkenntnis der Erfinder, dass aufgrund seiner chemischen Formel 1,1,1,4,4,4-Hexafluor-2-Buten (CF3CH=CHCF3) eine hohe dielektrische Festigkeit aufweist. Ohne sich auf eine Erklärung hierfür festlegen zu wollen, nehmen die Erfinder an, dass mit der Anzahl an Fluor-Atomen in einem Kohlenwasserstoff auch dessen dielektrische Festigkeit zunimmt. Es ist zu erwarten, dass 1,1,1,4,4,4-Hexafluor-2-Buten eine relative dielektrische Festigkeit bezogen auf SF₆ von ≥ 1 aufweist.

Weiter beruht die vorliegende Erfindung auf der Erkenntnis der Erfinder, dass aufgrund der Größe des Moleküls, d.h. insbesondere der Anzahl an beteiligten Atomen, 1,1,1,4,4,4-Hexafluor-2-Buten auch gute Löscheigenschaften aufweist. Mit zunehmender Zahl an Atomen bzw. Gruppen die in einem Molekül verbunden sind, steigt die Zahl der Molekül-Bruchstücke, die im Falle eines Lichtbogens gebildet werden. Dadurch wird zum einen der Druck in der Vorrichtung erhöht, zum anderen die Temperatur im Vergleich zu kleineren Molekülen reduziert. Weiterhin bedingt die zunehmende Zahl an Atomen bzw. Gruppen in einem Molekül eine Zunahme der Anzahl der Freiheitsgrade und damit der spezifischen Wärmekapazität, so dass eine Temperaturerhöhung im Lichtbogen mehr Energie erfordert.

1,1,1,4,4,4-Hexafluor-2-Buten bietet den weiteren Vorteil, dass es - ähnlich wie SF₆ - sechs Fluoratome besitzt. Diese Fluoratome sind an den endständigen Methylgruppen gebunden und können dementsprechend einsetzende Gasentladungen, die eine Vorstufe zum dielektrischen Durchschlag bilden, durch dissoziatives Attachment (d.h. Abspaltung unter Bildung negativer Fluor-Ionen, die jeweils ein freies Elektron binden) unterbinden.

Auch zeichnet sich 1,1,1,4,4,4-Hexafluor-2-Buten durch einen niedrigen GWP-Wert von 9,4 (bezogen auf CO₂ über einen Zeitraum von 100 Jahren), eine nur kurze geschätzte Lebensdauer von 24 Tagen in der Atmosphäre sowie eine geringe Giftigkeit aus.

Schließlich können aufgrund des Siedepunkts von etwa 33 °C bei Normaldruck (Quelle: US 2008/0269532 A1) auch bei niedrigen zu berücksichtigenden Temperaturen Partialdrücke von 1,1,1,4,4,4-Hexafluor-2-Buten eingestellt werden, die für die dielektrische Festigkeit von Isoliergas bzw. Isoliergasgemischen einen wesentlichen Beitrag leisten.

Da erfindungsgemäße Vorrichtungen über einen weiten Temperaturbereich eingesetzt werden bzw. einem weiten Temperaturbereich ausgesetzt sein können, und da die isolierenden und/oder Lösch-Eigenschaften des Mediums in einem hohen Maße von dessen Zusammensetzung abhängen, ist es in vielen Fällen erforderlich, dass die Zusammensetzung des Mediums so gewählt ist, dass auch an der unteren Grenze des möglichen bzw. spezifizierten Temperaturbereichs keine Kondensation eines Inhaltsstoffs des Mediums eintritt, da mit einer solchen Kondensation unweigerlich eine Änderung der Zusammensetzung und/oder Konzentration des/der Inhaltsstoffs/Inhaltsstoffe des Mediums verbunden ist. Und eine solche Änderung der Zusammensetzung und/oder Konzentration des Mediums kann einen negativen Einfluss auf die isolierenden und/oder Lösch-Eigenschaften haben.

Gemäß der vorliegenden Erfindung kann bspw. für eine Anwendungstemperatur von minimal -30 °C 1,1,1,4,4,4-Hexafluor-2-Buten mit einem Partialdruck von (bis zu) etwa 50 mbar in dem Medium vorhanden sein, ohne dass eine Kondensation stattfindet. Und für eine Anwendungstemperatur von bspw. minimal -5 °C kann 1,1,1,4,4,4-Hexafluor-2-Buten mit einem Partialdruck von etwa (bis zu) 200 mbar verwendet werden, ohne dass eine Kondensation stattfindet. Einen geeigneten Partialdruck/geeignete Partialdrücke der Komponente(n) eines Mediums für die erfindungsgemäße Vorrichtung kann ein Fachmann in Kenntnis des Siedepunkts einer Verbindung und der minimalen zu berücksichtigenden Temperatur auf einfache Weise bestimmen.

Gemäß einer ersten vorteilhaften Weiterbildung der Erfindung ist die Vorrichtung dadurch gekennzeichnet, dass das Medium aus cis-1,1,1,4,4,4-Hexafluor-2-Buten, trans-1,1,1,4,4,4-Hexafluor-2-Buten oder einer Mischung aus cis- und trans-1,1,1,4,4,4-Hexafluor-2-Buten besteht.

Aufgrund ihrer ähnlichen physikalischen und chemischen Eigenschaften kann eine dieser Verbindungen oder eine Mischung aus cis- und trans-1,1,1,4,4,4-Hexafluor-2-Buten das Medium ausbilden. Sind sowohl cis- als auch trans-1,1,1,4,4,4-Hexafluor-2-Buten vorhanden, können die Isomere eine azeotrope Mischung ergeben.

Verfahren zur Herstellung von cis-1,1,1,4,4,4-Hexafluor-2-Buten und trans-1,1,1,4,4,4-Hexafluor-2-Buten sind bekannt. So kann cis-1,1,1,4,4,4-Hexafluor-2-Buten [(Z)-1,1,1,4,4,4-Hexafluor-2-Buten] bzw. ein Gemisch aus cis- und trans-1,1,1,4,4,4-Hexafluor-2-Buten hergestellt werden durch die selektive Hydrierung von Hexafluor-2-butin in einem Rohrreaktor aus Hastelloy unter Verwendung eines Lindlar-Katalysators und Wasserstoff (US 2008/0269532 A1). Und trans-1,1,1,4,4,4-Hexafluor-2-Buten [(E)-1,1,1,4,4,4-Hexafluor-2-Buten] kann bspw. hergestellt werden durch tropfenweise Zugabe von 1,2-Dichlor-1,1,4,4,4-Pentafluorobutan in eine Mischung aus destilliertem Tetramethylensulfon und getrocknetem Kaliumfluorid bei 190 °C (DE 43 05 163 A1).

Gemäß einer weiteren vorteilhaften Weiterbildung der Erfindung enthält das Medium neben 1,1,1,4,4,4-Hexafluor-2-Buten weiter ein oder mehrere Elemente und/oder eine Verbindung, das/die auswählbar ist/sind aus
- Stickstoff,
- Sauerstoff und/oder
- Kohlendioxid.

Gemäß noch einer weiteren vorteilhaften Weiterbildung der Erfindung enthält das Medium weiter ein(e) oder mehrere Verbindung(en) und/oder Element(e), die auswählbar sind aus
- fluoriertem/fluorierten Nitril(en) mit 3 bis 5 Kohlenstoffatomen,
- fluoriertem/fluorierten Keton(en) mit 3 bis 6 Kohlenstoffatomen,
- Hydrofluorolefin(en) mit 2 bis 6 Kohlenstoffatomen, wobei das/die weitere(n) Hydrofluorolefin(e) kein 1,1,1,4,4,4-Hexafluor-2-Buten umfasst,
- Stickstoffmonoxid,
- Stickstoffdioxid,
- Distickstoffmonoxid,
- Kohlenmonoxid,
- Argon und/oder
- Neon.

Das/Die genannten Verbindung(en) und/oder Element(e) sowie auch Sauerstoff, Stickstoff und Kohlendioxid zeichnen sich dadurch aus, dass sie keine oder nur eine geringe schädigende Wirkung auf die Ozonschicht der Stratosphäre ausüben und im Vergleich zu SF₆ nur ein geringes Treibhauspotential aufweisen.

So sind bspw. Hydrofluorolefine aufgrund des Umstands, dass sie wenigstens ein an einen Kohlenstoff gebundenes Wasserstoffatom und wenigstens eine Kohlenstoff-Kohlenstoff-Doppelbindung aufweisen, chemisch weniger stabil als Perfluorolefine, Perfluoralkane und SF₆. Somit weisen Hydrofluorolefine im Vergleich zu SF₆ eine deutlich geringere Lebensdauer in der Atmosphäre auf. Entsprechendes gilt für fluorierte Ketone aufgrund der bei ihnen vorhandenen wenigstens einen Carbonylgruppe.

Durch Mischung von 1,1,1,4,4,4-Hexafluor-2-Buten mit einem oder mehreren fluorierten Keton(en) und/oder Hydrofluorolefin(en) kann in vorteilhafter Weise die dielektrische Festigkeit des Mediums (Isoliergases, Fluids) erhöht werden. Hierbei trägt jede der fluorierten Gas-Komponenten zur Unterbindung einsetzender Gasentladungen durch dissoziatives Attachment bei. Ein weiterer Vorteil einer solchen Gasmischung liegt darin, dass jede der fluorhaltigen Gaskomponenten mit einem Partialdruck im Gasgemisch enthalten sein kann, der bis zu ihrem individuellen Sättigungsdampfdruck reicht, d.h. bei 0 °C könnten bspw. zusätzlich zu 270 mbar 1,1,1,4,4,4-Hexafluor-2-Buten noch fluorierte(s) Keton(e) und/oder Hydrofluorolefin(e) im Gasgemisch enthalten sein.

Unter einem "fluorierten Keton" ist gemäß der vorliegenden Anmeldung eine Verbindung zu verstehen, die als funktionelle Gruppe wenigstens eine Carbonylgruppe (>C=O) enthält und deren Ketongruppe (C-C(O)-C) drei Kohlenstoffatome aufweist. An wenigstens ein Kohlenstoffatom eines "fluorierten Ketons" ist wenigstens ein Fluoratom gebunden.

Weiter umfasst der Ausdruck "fluoriertes Keton", so wie er in dieser Anmeldung verwendet wird
- Perfluorketone und Hydrofluorketone,
- gesättigte und ungesättigte Verbindungen,
- Verbindungen mit linearer, verzweigter oder zyklischer Kohlenstoffkette, und/oder
- Verbindungen mit zwei oder mehr Carbonylgruppen.

Die "fluorierten Ketone", die gemäß der vorliegenden Erfindung Bestandteil des Mediums sein können, weisen somit 3, 4, 5 oder 6 Kohlenstoffatome auf. Mit Ausnahme des Carbonylkohlenstoffs können bei jedem weiteren Kohlenstoff ein, zwei oder alle Bindungsstellen mit einem Fluoratom besetzt sein.

Als fluorierte Ketone mit 3 Kohlenstoffatomen seien erwähnt: Fluoraceton, 1,3-Difluoraceton, 1,1,3-Trifluoraceton, 1,1,1-Trifluoraceton, 1,1,1,3-Tetrafluoraceton, 1,1,3,3-Tetrafluoraceton, 1,1,1,3,3-Pentafluoraceton, Hexafluoraceton.

Weitere Beispiele für bevorzugte fluorierte mono- und di-Ketone mit 4, 5 oder 6 Kohlenstoffatomen sind:

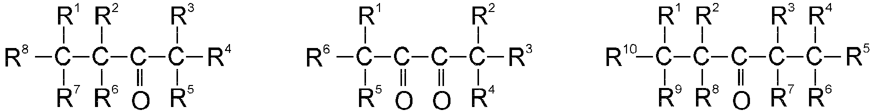

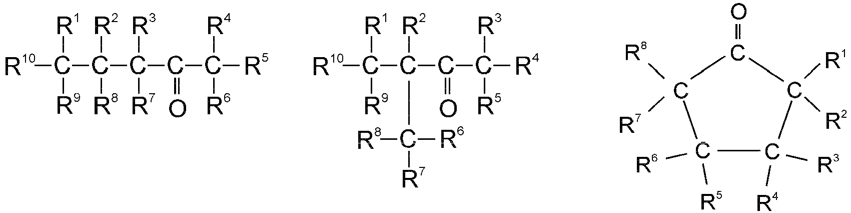

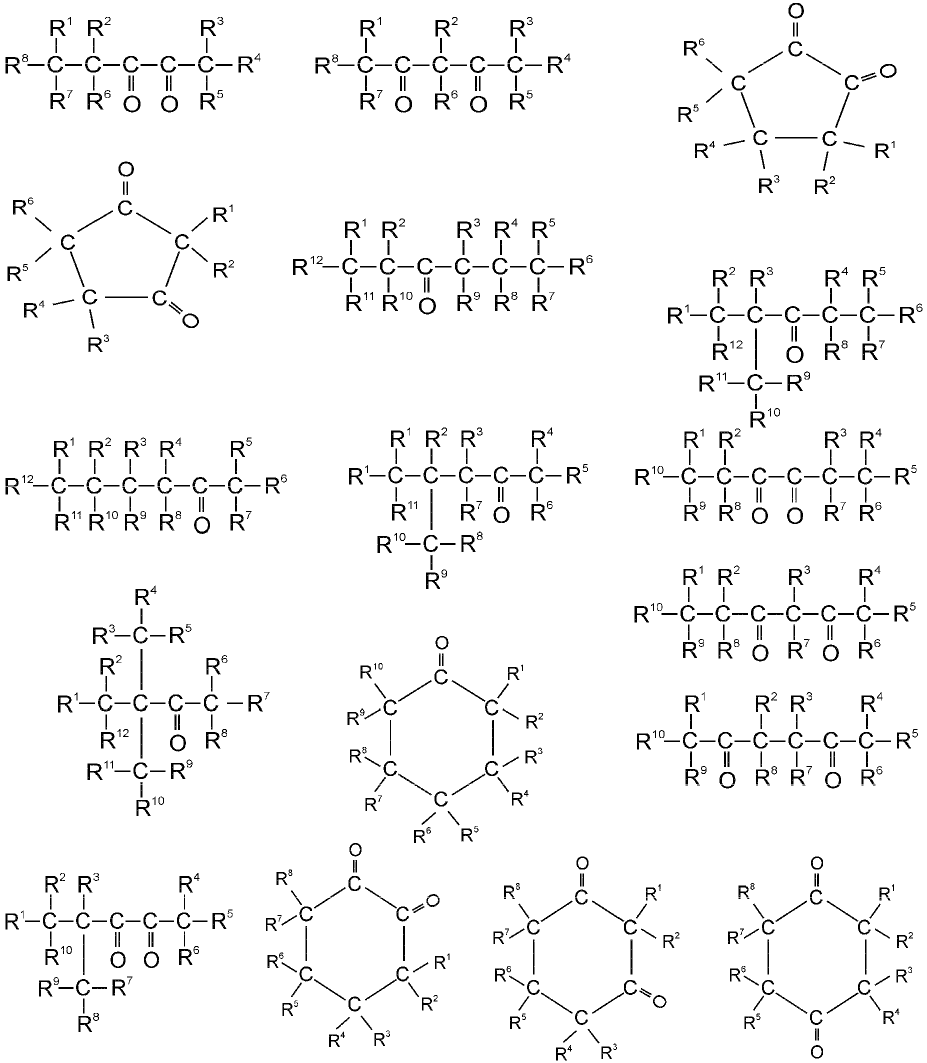

Die in den Strukturformeln für die Ketone angegebenen Reste R¹, R², R³, R⁴, R⁵, R⁶, R⁷, R⁸, R⁹, R¹⁰, R¹¹ und R¹² repräsentieren unabhängig voneinander jeweils ein Wasserstoffatom oder ein Fluoratom. Die Nummerierung der Reste R in den verschiedenen Strukturformeln dient nur der Veranschaulichung und ist nicht systematisch. Dies bedeutet, dass ein Rest mit einer bestimmten Nummerierung in einer Strukturformel ein Wasserstoffatom sein kann und ein Rest mit der gleichen Nummerierung in einer anderen Strukturformel ein Fluoratom und vice versa.

Insbesondere bei Fluorketonen mit 3 oder 4 Kohlenstoffatomen ist aufgrund der bei diesen Verbindungen oftmals gegebenen Toxizität auf entsprechende Sicherheit in Bezug auf Personenschutz (maximale Arbeitsplatzkonzentration, Sicherheitsmaßnahmen bei einem Austritt in die Umgebung, etc.) zu achten.

Ein Hydrofluorolefin gemäß der vorliegenden Anmeldung ist eine organische Verbindung mit wenigstens einer Kohlenstoff-Kohlenstoff-Doppelbindung. Bei wenigstens einem Kohlenstoffatom ist an wenigstens eine Bindungsstelle ein Wasserstoffatom gebunden, und bei wenigstens einem Kohlenstoffatom ist an wenigstens eine Bindungsstelle ein Fluoratom gebunden.

Des Weiteren können die Hydrofluorolefine gemäß der vorliegenden Anmeldung
- mehrere Doppelbindungen, und/oder
- eine lineare, verzweigte und zyklische Kohlenstoffkette, aufweisen.

Beispiele für ein Hydrofluorolefin mit 2 Kohlenstoffatomen sind 1-Fluorethen, 1,2-Difluorethen und Trifluorethen.

Beispiele für ein Hydrofluorolefin mit 3 Kohlenstoffatomen sind 1-Fluorpropen, 2-Fluorpropen, 3-Fluorpropen, 1,1-Difluorpropen, 1,2-Difluorpropen, 1,3-Difluorpropen, 1,1,2-Trifluorpropen,1,1,3-Trifluorpropen, 1,2,3-Trifluorpropen, 2,3,3,-Trifluorpropen, 1,2,3,3-Tetrafluorpropen, 1,3,3,3-Tetrafluorpropen, 2,3,3,3-Tetrafluorpropen, 1,1,2,3,3-Pentafluorpropen, 1,1,3,3,3-Pentafluorpropen, 1,2,3,3,3-Pentafluorpropen, 1,1-Difluorpropadien, 1,2-Difluorpropadien, Trifluorpropadien.

Weitere bevorzugte Beispiele für Hydrofluorolefine mit 4, 5 oder 6 Kohlenstoffatomen sind:

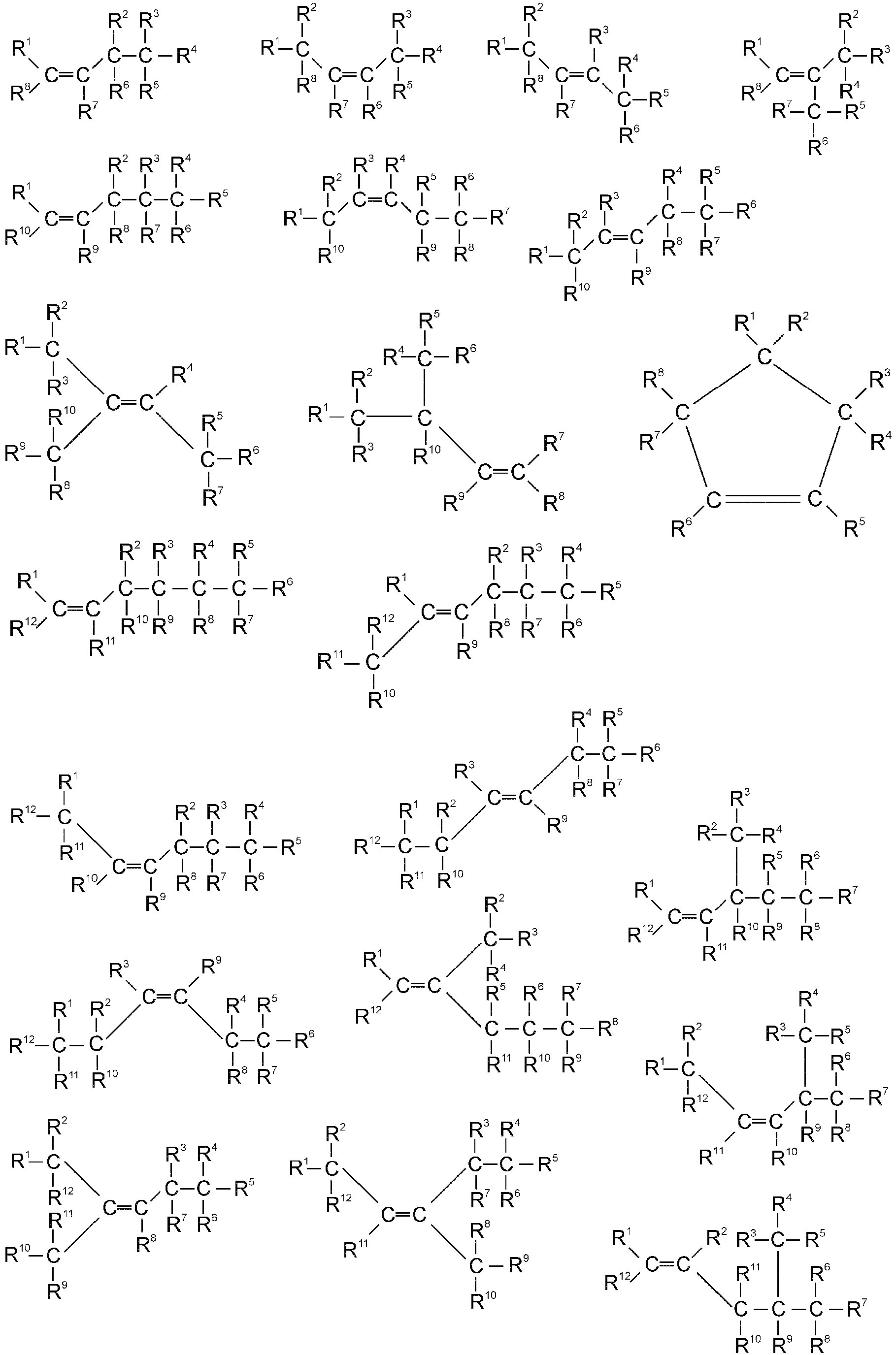

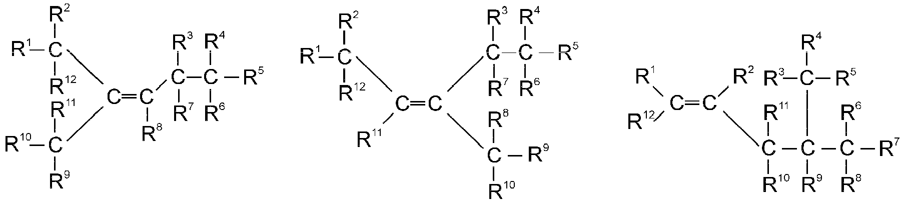

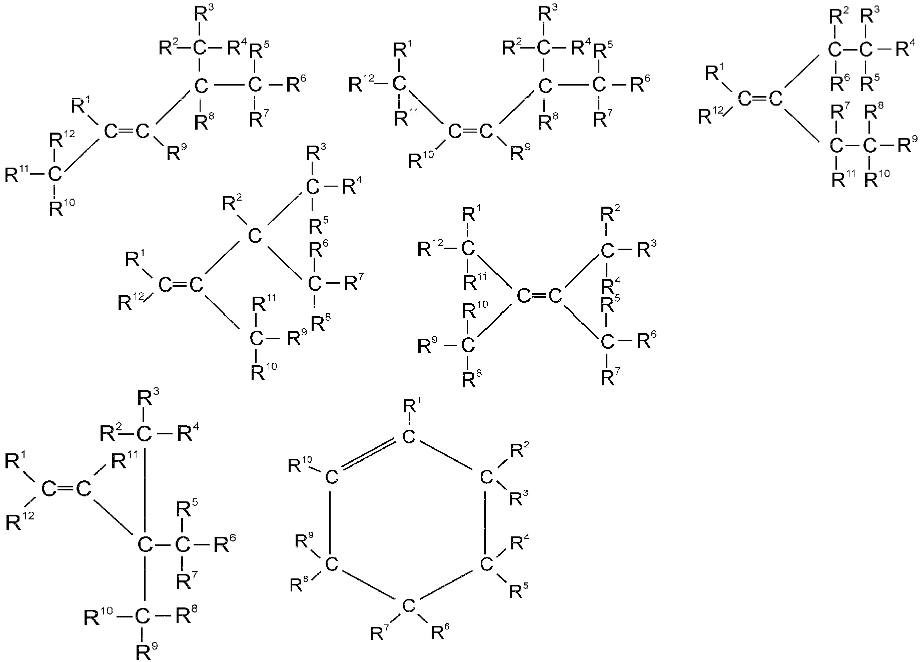

Die in den Strukturformeln für die Hydrofluorolefine angegebenen Reste R¹, R², R³, R⁴, R⁵, R⁶, R⁷, R⁸, R⁹, R¹⁰, R¹¹ und R¹² repräsentieren unabhängig voneinander jeweils ein Wasserstoffatom oder einen Fluoratom. Die Nummerierung der Reste R in den verschiedenen Strukturformeln dient nur der Veranschaulichung und ist nicht systematisch. Dies bedeutet, dass ein Rest mit einer bestimmten Nummerierung in einer Strukturformel ein Wasserstoffatom und ein Rest mit der gleichen Nummerierung in einer anderen Strukturformel ein Fluoratom sein kann und vice versa.

Von der vorliegenden Erfindung umfasst sind nicht nur die cis- und trans-Isomere sondern auch - sofern bei den jeweiligen Verbindungen vorhanden- die (S)- und (R)-Konfigurationen der Fluorketone und/oder Hydrofluorolefine.

Bei dem/den in dem Medium zusätzlich zu 1,1,1,4,4,4-Hexafluor-2-Buten optional vorhandenem/vorhandenen Fluorketon(en) und/oder Hydrofluorolefin(en) ist es bevorzugt, dass diese Verbindung(en) nicht mehr als zwei Wasserstoffatome im Molekül aufweisen. Bei einer höheren Anzahl an Wasserstoffatomen im Molekül steigt die Brennfähigkeit dieser Verbindungen und somit auch die Explosionsgefahr - etwa im Falle eines Lichtbogens - an.

Alternativ oder zusätzlich zu den oben beschriebenen Fluorketonen und/oder Hydrofluorolefinen können ein oder mehrere weitere gasförmige Bestandteile in dem Medium vorhanden sein. Bei diesem/diesen gasförmigen Bestandteil(en) kann es sich bspw. um (einen) natürliche(n) Bestandteil(e) der Luft und/oder (ein) Edelgas(e), bevorzugt um Sauerstoff, Stickstoff, Stickstoffmonoxid, Stickstoffdioxid, Distickstoffmonoxid, Kohlendioxid, Kohlenmonoxid, Argon und/oder Neon handeln.

Ist als weiterer gasförmiger Bestandteil in dem Medium Sauerstoff enthalten, so sollte dessen Anteil bevorzugt in dem Medium ≤ 5 Vol.-% betragen. Bei einem derartig kleinen Anteil von Sauerstoff in dem Medium ist auch bei brennbaren Hydrofluorolefinen und/oder Fluorketonen deren obere Zündgrenze überschritten.

Erfindungsgemäß können weitere, die dielektrische Festigkeit erhöhende gasförmige Bestandteile enthalten sein, deren Treibhauspotentiale oder Arbeitsplatzgrenzwerte auch über denen der bisher genannten Bestandteile liegen können, wobei deren Konzentration so niedrig gewählt wird, dass Grenzwerte für Treibhauspotential und maximale Arbeitsplatzkonzentrationen durch das Gemisch eingehalten werden. Beispiele solcher Substanzen sind z.B. fluorierte Nitrile mit der Summenformel CₙF₂ₙ₊₁CN, deren Siedepunkt und dielektrische Festigkeit mit steigender Zahl der C-Atome steigt, deren Treibhauspotenzial und Toxizität aber mit steigender Zahl der C-Atome sinkt.

In der erfindungsgemäßen Vorrichtung und ihren vorteilhaften Weiterbildungen ist das Medium in vorteilhafter Weise derart gebildet oder zusammengesetzt, dass das 1,1,1,4,4,4-Hexafluor-2-Buten einen Partialdruck kleiner dem Atmosphärendruck aufweist. Beispiele für geeignete Partialdrücke in Abhängigkeit von einer zu berücksichtigenden unteren Temperaturgrenze sind bereits weiter oben genannt worden. Ist keine weitere Komponente außer 1,1,1,4,4,4-Hexafluor-2-Buten in dem Medium enthalten, weist dieses somit in der Vorrichtung einen Unterdruck im Vergleich zu dem Atmosphärendruck auf. Sind weitere gasförmige Komponenten in dem Medium enthalten, können - insbesondere bei Verwendung einer oder mehrerer der oben erwähnten natürlichen Bestandteile der Luft und/oder Edelgase, wie etwa Sauerstoff, Stickstoff, Stickstoffmonoxid, Stickstoffdioxid, Distickstoffmonoxid, Kohlendioxid, Kohlenmonoxid, Argon und/oder Neon, das Medium in der Vorrichtung einen Druck gleich dem oder größer als der Atmosphärendruck aufweisen, bspw. in einem Bereich von etwa 1,5 bar bis etwa 7 bar.

Die erfindungsgemäße Vorrichtung unterliegt keinen besonderen Beschränkungen und es kann sich dabei um jede Vorrichtung handeln, die eine Einrichtung aufweist, die bei einem Betriebszustand der Vorrichtung eine elektrische Spannung von 1 kV oder größer aufweist bzw. bei der eine derartige Spannung anliegt. Beispiele für derartige Einrichtungen sind ein Transformator, eine Stromleitung, eine Sammelschiene, ein Trennschalter, ein Leistungsschalter, ein Lasttrennschalter, ein Erdungsschalter, ein Schütz, ein Relais, etc.

Eine elektrische Spannung im Bereich von 1 kV bis etwa 72 kV wird oftmals als Mittelspannung, eine elektrische Spannung im Bereich ab 72 kV als Hochspannung bezeichnet, wobei die Grenze zwischen Mittelspannung und Hochspannung nicht genau festgelegt ist bzw. im Laufe der Zeit Verschiebungen erfahren hat. Bei der erfindungsgemäßen Vorrichtung bzw. der darin vorhandenen Einrichtung handelt es sich auf jeden Fall um eine solche, die in einem weit verstandenen Sinn für eine Mittelspannung oder Hochspannung vorgesehen ist.

Bei der erfindungsgemäßen Vorrichtung kann es sich auch um eine handeln, bei der starke elektrische Felder auftreten, wie dies bspw. bei Beschleunigeranlagen der Fall ist. Bei Beschleunigeranlagen für geladene oder neutrale Teilchen, wie etwa Elektronen, Neutronen, Protonen oder schwere Ionen, ist oftmals wenigstens ein so genannter Wellenleiter vorgesehen, der zumindest teilweise mit einem isolierenden und/oder Lichtbogen-löschenden Medium umgeben ist.

Es sind verschiedene Arten von Beschleunigeranlagen bekannt, die sich unter anderem dadurch unterscheiden, ob die Beschleunigung der Teilchen geradlinig oder zyklisch erfolgt. Beispiele für von der vorliegenden Erfindung umfasste Beschleunigeranlagen mit geradliniger Beschleunigung sind etwa Van-de-Graaff-Beschleuniger, das Pelletron, der Tandembeschleuniger, der Cockcroft-Walton-Beschleuniger, das Dynamitron, der Linearbeschleuniger und der Kielfeld-Beschleuniger. Beispiele für von der vorliegenden Erfindung umfassten Beschleunigeranlagen mit zyklischer Beschleunigung (d.h. spiralartige, rosettenförmige oder ringförmig geschlossene Bahn) sind das Betatron, das Zyklotron, das Mikrotron, das Synchrotron, der Speicherring-Beschleuniger und das Rhodotron.

Bei Beschleunigeranlagen, bei denen etwa Neutronen, Protonen oder schwere Ionen (bspw. Kohlenstoff-Ionen) zu medizinischtherapeutischen Zwecken verwendet werden, sind zur punktgenauen Anwendung der beschleunigten Teilchen Drehgelenke erforderlich, die oftmals eine vergleichsweise hohe Leckrate aufweisen. Daher ist bei derartigen Beschleunigeranlagen ein vergleichsweise häufiges Nachfüllen des Mediums zwingend erforderlich. Durch die vorliegende Erfindung ergibt sich auch für derartige Beschleunigeranlagen der Vorteil, dass das bisher überwiegend verwendete SF₆ durch ein Fluid mit einem sehr viel geringeren Treibhauspotential ersetzt werden kann. Bei Einsatz des erfindungsgemäßen Mediums für diese Beschleunigeranlagen verursacht der technisch unvermeidliche Austritt des Mediums in die Atmosphäre keinen messbaren Anteil am Treibhauseffekt.

Die vorliegende Erfindung betrifft auch ein Verfahren zum Verwenden eines gasförmigen, elektrisch isolierenden und/oder Lichtbogen-löschenden Fluids. Das Verfahren umfasst die Schritte:
- Bereitstellen einer Vorrichtung mit wenigstens einer in einem Betriebszustand der Vorrichtung eine elektrische Spannung von 1 kV oder größer aufweisenden elektrischen Einrichtung und/oder mit wenigstens einer Einrichtung zur Teilchenbeschleunigung, wobei die Einrichtung zumindest teilweise in einem Behältnis angeordnet ist, das für ein gasförmiges, elektrisch isolierendes und/oder Lichtbogen-löschendes Medium vorgesehen ist, und
- Einführen eines Mediums, das aus 1,1,1,4,4,4-Hexafluor-2-Buten besteht oder 1,1,1,4,4,4-Hexafluor-2-Buten enthält, als gasförmiges, elektrisch isolierendes und/oder Lichtbogen-löschendes Medium in das Behältnis, wobei ein Medium in das Behältnis eingeführt wird, bei dem 1,1,1,4,4,4-Hexafluor-2-Buten mit einem Partialdruck im Bereich von 30 mbar bis einschließlich 250 mbar enthalten ist.

Hierbei kann das Einführen des Mediums selbstverständlich auch derart erfolgen, das sich der genannte Partialdruck von 1,1,1,4,4,4-Hexafluor-2-Buten erst mit dem Einführen von 1,1,1,4,4,4-Hexafluor-2-Buten-haltigem Medium in den Behälter einstellt. Bspw. kann bereits ein gasförmiges Medium in dem Behälter vorhanden sein und es wird so lange 1,1,1,4,4,4-Hexafluor-2-Buten-haltiges Medium eingeführt, bis sich der genannte Partialdruck eingestellt hat.

Gemäß einer ersten vorteilhaften Weiterbildung des Verfahrens wird ein Medium in das Behältnis eingeführt, das aus cis-1,1,1,4,4,4-Hexafluor-2-Buten, trans-1,1,1,4,4,4-Hexafluor-2-Buten oder einer Mischung aus cis- und trans-1,1,1,4,4,4-Hexafluor-2-Buten besteht.

Gemäß einer zweiten vorteilhaften Weiterbildung des Verfahrens wird ein Medium in das Behältnis eingeführt, das neben 1,1,1,4,4,4-Hexafluor-2-Buten weiter eine oder mehrere Elemente und/oder eine Verbindung enthält, die auswählbar sind aus
- Stickstoff,
- Sauerstoff und
- Kohlendioxid.

Und gemäß einer weiteren vorteilhaften Weiterbildung des Verfahrens wird ein Medium in das Behältnis eingeführt, das weiter enthält ein oder mehrere Verbindungen und/oder Elemente, die auswählbar sind aus
- fluoriertem/fluorierten Nitril(en) mit 3 bis 5 Kohlenstoffatomen,
- fluoriertem/fluorierten Keton(en) mit 3 bis 6 Kohlenstoffatomen,
- Hydrofluorolefin(en) mit 3 bis 6 Kohlenstoffatomen,
- Stickstoffmonoxid,
- Stickstoffdioxid,
- Distickstoffmonoxid,
- Kohlenmonoxid,
- Argon und/oder
- Neon.

Erfindungsgemäß kann die Auswahl weitere, die dielektrische Festigkeit erhöhende gasförmige Bestandteile wie fluorierte Nitrile CₙF₂ₙ₊₁CN enthalten, deren Treibhauspotentiale oder Arbeitsplatzgrenzwerte auch über denen der bisher genannten Bestandteile liegen können, wobei deren Konzentration so niedrig gewählt wird, dass Grenzwerte für Treibhauspotential und maximale Arbeitsplatzkonzentrationen durch das Gemisch eingehalten werden.

Auch bei dieser Ausführungsform des erfindungsgemäßen Verfahrens können die einzelnen Komponenten des Mediums räumlich und/oder zeitlich getrennt voneinander in das Behältnis eingeführt werden.

Schließlich kann in einer vierten, vorteilhaften Weiterbildung des Verfahrens eines der vorgenannten Medien aus einem Reservoir im Moment des Schaltvorganges in einer gasisolierten Schaltanlage in den Bereich eingeblasen werden, in dem der Schaltvorgang stattfindet. Vorrichtungen und Verfahren dazu sind dem Fachmann bekannt.

Die obigen Ausführungen bezüglich der erfindungsgemäßen Vorrichtung, ihrer vorteilhaften Weiterbildungen sowie der damit erreichbaren Vorteile gelten entsprechend auch für das erfindungsgemäße Verfahren. Ebenso sind von der vorliegenden Anmeldung Ausführungsformen des erfindungsgemäßen Verfahrens umfasst, die sich für einen Fachmann aus der Beschreibung der erfindungsgemäßen Vorrichtung sowie deren vorteilhafte Weiterbildungen ohne weiteres ergeben.

In der vorliegenden Anmeldung sind erfindungsgemäße, bevorzugte und/oder vorteilhafte Ausführungsformen der vorliegenden Erfindung beschrieben. Der Schutzbereich der vorliegenden Erfindung ist jedoch nicht hierauf beschränkt sondern ergibt sich durch die beigefügten Ansprüche, wobei bei der Bestimmung des Schutzbereichs der Anmeldung solchen Elementen gebührend Rechnung zu tragen ist, die Äquivalente der in den Patentansprüchen genannten Elemente sind.

## Patentansprüche

1. Vorrichtung mit wenigstens einer in einem Betriebszustand der Vorrichtung eine elektrische Spannung von 1 kV oder größer aufweisenden elektrischen Einrichtung, und/oder mit wenigstens einer Einrichtung zur Teilchenbeschleunigung, wobei die Einrichtung zumindest teilweise in einem Gehäuse angeordnet ist, das ein gasförmiges, elektrisch isolierendes und/ oder Lichtbogen-löschendes Medium enthält, **dadurch gekennzeichnet, dass** das Medium aus 1,1,1,4,4,4-Hexafluor-2-Buten besteht oder 1,1,1,4,4,4-Hexafluor-2-Buten enthält und dass in dem Medium 1,1,1,4,4,4-Hexafluor-2-Buten mit einem Partialdruck im Bereich von 30 mbar bis einschließlich 250 mbar enthalten ist.

2. Vorrichtung gemäß Anspruch 1, **dadurch gekennzeichnet, dass** das Medium aus cis-1,1,1,4,4,4-Hexafluor-2-Buten, trans-1,1,1,4,4,4-Hexafluor-2-Buten oder einer Mischung aus cis- und trans-1,1,1,4,4,4-Hexafluor-2-Buten besteht.

3. Vorrichtung gemäß Anspruch 1 oder 2, **dadurch gekennzeichnet, dass** das Medium neben 1,1,1,4,4,4-Hexafluor-2-Buten weiter ein oder mehrere Elemente und/oder eine Verbindung enthält, das/die auswählbar ist/sind aus
- Stickstoff,
- Sauerstoff und/oder
- Kohlendioxid.

4. Vorrichtung gemäß einem der vorhergehenden Ansprüche, **dadurch gekennzeichnet, dass** das Medium weiter ein(e) oder mehrere Verbindung(en) und/oder Element(e) enthält, die auswählbar sind aus
- fluoriertem/fluorierten Nitril(en) mit 3 bis 5 Kohlenstoffatomen,
- fluoriertem/fluorierten Keton(en) mit 3 bis 6 Kohlenstoffatomen,
- Hydrofluorolefin(en) mit 2 bis 6 Kohlenstoffatomen, wobei das/die weitere(n) Hydrofluorolefin(e) kein 1,1,1,4,4,4-Hexafluor-2-Buten ist,
- Stickstoffmonoxid,
- Stickstoffdioxid,
- Distickstoffmonoxid,
- Kohlenmonoxid,
- Argon und/oder
- Neon.

5. Vorrichtung gemäß einem der vorhergehenden Ansprüche, **dadurch gekennzeichnet, dass** die Vorrichtung ein Transformator, eine Stromleitung, eine Sammelschiene, ein Trennschalter, ein Leistungsschalter, ein Lasttrennschalter, ein Erdungsschalter, ein Schütz, ein Relais und/oder ein Wellenleiter ist oder wenigstens eine der genannten Einrichtungen aufweist.

6. Vorrichtung gemäß einem der vorhergehenden Ansprüche, **dadurch gekennzeichnet, dass** die Vorrichtung eine Beschleunigereinrichtung für Elektronen, Neutronen, Protonen oder schwere Ionen ist.

7. Verfahren zum Verwenden eines gasförmigen, elektrisch isolierenden und/oder Lichtbogen-löschenden Mediums mit den Schritten
Bereitstellen einer Vorrichtung mit wenigstens einer in einem Betriebszustand der Vorrichtung eine elektrische Spannung von 1 kV oder größer aufweisenden elektrischen Einrichtung und/ oder mit wenigstens einer Einrichtung zur Teilchenbeschleunigung, wobei die Einrichtung zumindest teilweise in einem Behältnis angeordnet ist, das für ein gasförmiges, elektrisch isolierendes und/oder Lichtbogen-löschendes Medium vorgesehen ist,
und Einführen eines Mediums, das aus 1,1,1,4,4,4-Hexafluor-2-Buten besteht oder 1,1,1,4,4,4-Hexafluor-2-Buten enthält, als gasförmiges, elektrisch isolierendes und/oder Lichtbogen-löschendes Medium in das Behältnis, wobei ein Medium in das Behältnis eingeführt wird, bei dem 1,1,1,4,4,4-Hexafluor-2-Buten mit einem Partialdruck im Bereich von 30 mbar bis einschließlich 250 mbar enthalten ist.

8. Verfahren gemäß Anspruch 7, wobei ein Medium in das Behältnis eingeführt wird, das aus cis-1,1,1,4,4,4-Hexafluor-2-Buten, trans-1,1,1,4,4,4-Hexafluor-2-Buten oder einer Mischung aus cis- und trans-1,1,1,4,4,4-Hexafluor-2-Buten besteht.

9. Verfahren gemäß Anspruch 7 oder 8, wobei ein Medium in das Behältnis eingeführt wird, das neben 1,1,1,4,4,4-Hexafluor-2-Buten weiter eine oder mehrere Elemente und/oder eine Verbindung enthält, die auswählbar sind aus
- Stickstoff,
- Sauerstoff und
- Kohlendioxid.

10. Verfahren gemäß einem der Ansprüche 7 bis 9, wobei ein Medium in das Behältnis eingeführt wird, das weiter ein oder mehrere Verbindungen und/oder Elemente enthält, die auswählbar sind aus
- fluoriertem/fluorierten Nitril(en) mit 3 bis 5 Kohlenstoffatomen,
- fluoriertem/fluorierten Keton(en) mit 3 bis 6 Kohlenstoffatomen,
- Hydrofluorolefin(en) mit 3 bis 6 Kohlenstoffatomen,
- Stickstoffmonoxid,
- Stickstoffdioxid,
- Distickstoffmonoxid,
- Kohlenmonoxid,
- Argon und/oder
- Neon.

## Claims

1. Apparatus having at least one electric device having an electric potential of 1 kV or greater in an operating state of the apparatus and/or having at least one device for particle acceleration, where the device is at least partly arranged in a housing which contains a gaseous, electrically insulating and/or electric arc extinguishing medium, **characterized in that** the medium consists of 1,1,1,4,4,4-hexafluoro-2-butene or comprises 1,1,1,4,4,4-hexafluoro-2-butene and **in that** the 1,1,1,4,4,4-hexafluoro-2-butene is present with a partial pressure in the range from 30 mbar to 250 mbar, inclusive, in the medium.

2. Apparatus according to Claim 1, **characterized in that** the medium consists of cis-1,1,1,4,4,4-hexafluoro-2-butene, trans-1,1,1,4,4,4-hexafluoro-2-butene or a mixture of cis- and trans-1,1,1,4,4,4-hexafluoro-2-butene.

3. Apparatus according to Claim 1 or 2, **characterized in that** the medium contains 1,1,1,4,4,4-hexafluoro-2-butene together with one or more element (s) and/or a compound which can be selected from among
- nitrogen,
- oxygen and/or
- carbon dioxide.

4. Apparatus according to any of the preceding claims, **characterized in that** the medium further contains one or more compounds and/or elements which can be selected from among
- fluorinated nitrile(s) having from 3 to 5 carbon atoms,
- fluorinated ketone(s) having from 3 to 6 carbon atoms,
- hydrofluoroolefin(s) having from 2 to 6 carbon atoms, wherein the further hydrofluoroolefin(s) is/are not 1,1,1,4,4,4-hexafluoro-2-butene,
- nitrogen monoxide,
- nitrogen dioxide,
- dinitrogen monoxide,
- carbon dioxide,
- carbon monoxide,
- argon and/or
- neon.

5. Apparatus according to any of the preceding claims, **characterized in that** the apparatus is a transformer, a power line, a collection rail, a separating switch, a power switch, a load separating switch, a grounding switch, a protection, a relay and/or a waveguide or has at least one of the devices mentioned.

6. Apparatus according to any of the preceding claims, **characterized in that** the apparatus is an accelerator device for electrons, neutrons, protons or heavy ions.

7. Method of using a gaseous, electrically insulating and/or electric arc extinguishing medium
having the steps of:
provision of an apparatus having at least one electric device having an electric potential of 1 kV or greater in an operating state of the apparatus and/or having at least one device for particle acceleration, where the device is at least partly arranged in a container provided for a gaseous, electrically insulating and/or electric arc extinguishing medium,
and introduction of a medium which consists of 1,1,1,4,4,4-hexafluoro-2-butene or comprises 1,1,1,4,4,4-hexafluoro-2-butene as gaseous, electrically insulating and/or electric arc extinguishing medium into the container, wherein a medium in which 1,1,1,4,4,4-hexafluoro-2-butene is present with a partial pressure in the range from 30 mbar to 250 mbar is introduced into the container.

8. Method according to Claim 7, wherein a medium which consists of cis-1,1,1,4,4,4-hexafluoro-2-butene, trans-1,1,1,4,4,4-hexafluoro-2-butene or a mixture of cis- and trans-1,1,1,4,4,4-hexafluoro-2-butene is introduced into the container.

9. Method according to Claim 7 or 8, wherein a medium containing 1,1,1,4,4,4-hexafluoro-2-butene together with one or more element(s) and/or a compound which can be selected from among
- nitrogen,
- oxygen and
- carbon dioxide
is introduced into the container.

10. Method according to any of Claims 7 to 9, wherein a medium further containing one or more compounds and/or elements which can be selected from among
- fluorinated nitrile(s) having from 3 to 5 carbon atoms,
- fluorinated ketone(s) having from 3 to 6 carbon atoms,
- hydrofluoroolefin(s) having from 3 to 6 carbon atoms,
- nitrogen monoxide,
- nitrogen dioxide,
- dinitrogen monoxide,
- carbon monoxide,
- argon and/or
- neon
is introduced into the container.

## Revendications

1. Installation ayant au moins un dispositif électrique ayant, dans un état de fonctionnement de l'installation, une tension électrique supérieure ou égale à 1kV, et/ou ayant au moins un dispositif d'accélération de particules, dans laquelle le dispositif est disposé au moins dans une enveloppe, qui contient un fluide gazeux, isolant électriquement et/ou d'extinction d'un arc électrique, **caractérisée en ce que** le fluide est constitué du 1, 1, 1, 4, 4, 4-hexafluoro-2-butène ou contient du 1, 1, 1, 4, 4, 4-hexafluoro-2-butène et **en ce que** dans le fluide est contenu du 1, 1, 1, 4, 4, 4-hexafluoro-2-butène sous une pression partielle dans la plage de 30 mbar à y compris 250 mbar.

2. Installation suivant la revendication 1, **caractérisée en ce que** le fluide est constitué de 1, 1, 1, 4, 4, 4-hexafluoro-2-butène cis de 1, 1, 1, 4, 4, 4-hexafluoro-2-butène trans ou d'un mélange de 1, 1, 1, 4, 4, 4-hexafluoro-2-butène cis et trans.

3. Installation suivant la revendication 1 ou 2, **caractérisée en ce que** le fluide contient outre du 1, 1, 1, 4, 4, 4-hexafluoro-2-butène, un ou plusieurs éléments et/ou un composé qui peut / peuvent être choisi(s) parmi
- l'azote,
- l'oxygène et/ou
- le dioxyde de carbone.

4. Installation suivant l'une des revendications précédentes, **caractérisée en ce que** le fluide contient en outre un ou plusieurs composés et/ou élément(s), qui peuvent être choisis parmi
- un nitrile fluoré, des nitriles fluorés ayant de 3 à 5 atomes de carbone,
- un cétone fluoré, des cétones fluorés ayant de 3 à 6 atomes de carbone,
- une oléfine hydrofluorée, des oléfines hydrofluorées ayant de 2 à 6 atomes de carbone, dans laquelle en outre la ou les autres hydrofluoroléfines n'est pas du 1, 1, 1, 4, 4, 4-hexafluoro-2-butène,
- du monoxyde d'azote,
- du dioxyde d'azote,
- du monoxyde de diazote,
- du monoxyde de carbone,
- de l'argon et/ou
- du néon.

5. Installation suivant l'une des revendications précédentes, **caractérisée en ce que** l'installation est un transformateur, une ligne de courant, un rail collecteur, un sectionneur, un disjoncteur, un disjoncteur en charge, un interrupteur de mise à la terre, un contacteur, un relais et/ou un guide d'onde ou a au moins l'un des dispositifs mentionnés.

6. Installation suivant l'une des revendications précédentes, **caractérisée en ce que** l'installation est un dispositif d'accélération d'électrons, de neutrons, de protons ou d'ions lourds.

7. Procédé d'utilisation d'un fluide gazeux isolant électriquement et/ou d'extinction d'un arc électrique comprenant les stades :
on se procure une installation ayant au moins un dispositif électrique ayant, dans un état de fonctionnement de l'installation, une tension électrique supérieure ou égale à 1kV, et/ou au moins un dispositif d'accélération de particules, dans lequel le dispositif est disposé au moins en partie dans un récipient, qui est prévu pour un fluide gazeux, isolant électriquement et/ou d'extinction d'un arc électrique,
et on introduit un fluide, qui est constitué du 1, 1, 1, 4, 4, 4-hexafluoro-2-butène ou qui contient du 1, 1, 1, 4, 4, 4-hexafluoro-2-butène comme fluide gazeux, isolant électriquement et/ou d'extinction d'un arc électrique dans le récipient, dans lequel on introduit un fluide dans le récipient, dans lequel du 1, 1, 1, 4, 4, 4-hexafluoro-2-butène sous une pression partielle dans la plage de 30 mbar à y compris 250 mbar est contenu.

8. Procédé suivant la revendication 7, dans lequel on introduit un fluide dans le récipient, qui est constitué de 1, 1, 1, 4, 4, 4 hexafluoro 2 butanol cis, de 1, 1, 1, 4, 4-hexafluoro-2-butène trans ou d'un mélange de 1, 1, 1, 4, 4, 4-hexafluoro-2-butène cis et trans.

9. Procédé suivant la revendication 7 ou 8, dans lequel on introduit un fluide dans le récipient qui contient, en outre du 1, 1, 1, 4, 4, 4-hexafluoro-2-butène, un ou plusieurs éléments et/ou un composé, qui peuvent être choisis parmi
- l'azote,
- l'oxygène et
- le dioxyde de carbone.

10. Procédé suivant l'une des revendications 7 à 9, dans lequel on introduit un fluide dans le récipient, qui contient en outre un ou plusieurs composés et/ou éléments, qui peuvent être choisis parmi
- un nitrile fluoré, des nitriles fluorés ayant de 3 à 5 atomes de carbone,
- un cétone fluoré, des cétones fluorés ayant de 3 à 6 atomes de carbone,
- une oléfine hydrofluorée, des oléfines hydrofluorées ayant 3 à 6 atomes de carbone,
- du monoxyde d'azote,
- du dioxyde d'azote,
- du monoxyde de diazote,
- du monoxyde de carbone,
- de l'argon et/ou
- du néon.
